# FASCICULE DE BREVET EUROPEEN

(11) **EP 2 277 083 B1**
(45) Date de publication et mention de la délivrance du brevet: **04.01.2012**
(21) Numéro de dépôt: 09742311.5
(22) Date de dépôt: 10.04.2009
(51) Int. Cl.: G03B 21/58, G03B 15/00

(54) **ECRAN DE PROJECTION ÉQUIPÉ DE MOYENS D'EXERCICE DE FORCES DE TRACTION VERTICALES ET HORIZONTALES**
PROJEKTORBILDSCHIRM MIT MITTELN ZUR ANWENDUNG VERTIKALER UND HORIZONTALER SPANNUNGSKRÄFTE
PROJECTOR SCREEN EQUIPPED WITH MEANS FOR APPLYING VERTICAL AND HORIZONTAL TENSILE FORCES

(30) Priorité: 28.04.2008 FR 0802361
(43) Date de publication de la demande: 26.01.2011
(73) Titulaire: Adeo Screen Sp. Z.o.o., 59-500 Zlotoryja (PL)
(72) Inventeur: TRELOHAN, Yves, F-44700 Orvault (FR); CHARLOT, Yann, F-35650 Le Rheu (FR)
(74) Mandataire: Vinci, Marcello
(86) Numéro de dépôt international: PCT/FR2009/050662
(87) Numéro de publication internationale: WO 2009/136113

(56) Documents cités:
- DE-A1- 4 400 278
- GB-A- 691 230
- GB-A- 941 198
- US-A1- 2005 237 610
- US-A1- 2006 077 356

## Description

La présente invention concerne de manière générale les écrans de projection pour la visualisation de vidéos, d'images fixes ou encore de présentations informatiques. Par écran de projection on entend un écran qui est apte à être utilisé avec un dispositif de projection de type traditionnel ou de type rétro-projection, ledit écran pouvant être plan ou courbé.

L'invention concerne plus particulièrement un écran de projection comme definit dans le preambule de la revendication independante 1.

En position d'utilisation, la surface de projection doit être la plus conforme possible à la forme recherchée pour ladite surface afin d'éviter que des déformations apparaissent sur la surface de projection. Pour un écran dit "plat", la surface de projection doit être la plus plane possible et pour un écran dit "courbe", la surface de projection doit présenter une certaine courbure en position d'utilisation. Les déformations de la surface de projection sont usuellement appelées vagues ou plis et entraînent des distorsions de l'image projetée.

Une caractéristique importante de la surface de projection est son coefficient d'élasticité. En particulier, dans le cas d'un écran déroulant, la surface de projection doit être suffisamment souple pour pouvoir être enroulée, tout en étant suffisamment rigide pour pouvoir être tendue correctement de manière à obtenir une bonne planéité ou la courbure recherchée.

La solution la plus simple, connue de l'état de la technique, pour tendre une surface de projection rectangulaire, dont le bord longitudinal supérieur est fixé à des moyens de maintien, tels qu'un rouleau ou une barre de maintien, consiste à fixer au bord longitudinal inférieur de ladite surface de projection une barre de métal, encore appelée barre de lestage. La rigidité et le poids de la barre de lestage permettent d'appliquer une traction verticale le long des bords longitudinaux supérieur et inférieur de la surface de projection.

Cependant, une telle solution ne permet pas d'obtenir une régularité de forme, plane ou courbe, de la surface de projection qui soit suffisante et fiable dans le temps de la surface de projection. En effet, il peut apparaître des ondulations ou gondolements des bords latéraux de la surface de projection ainsi que des vagues ou plis dans la partie centrale de la surface de projection.

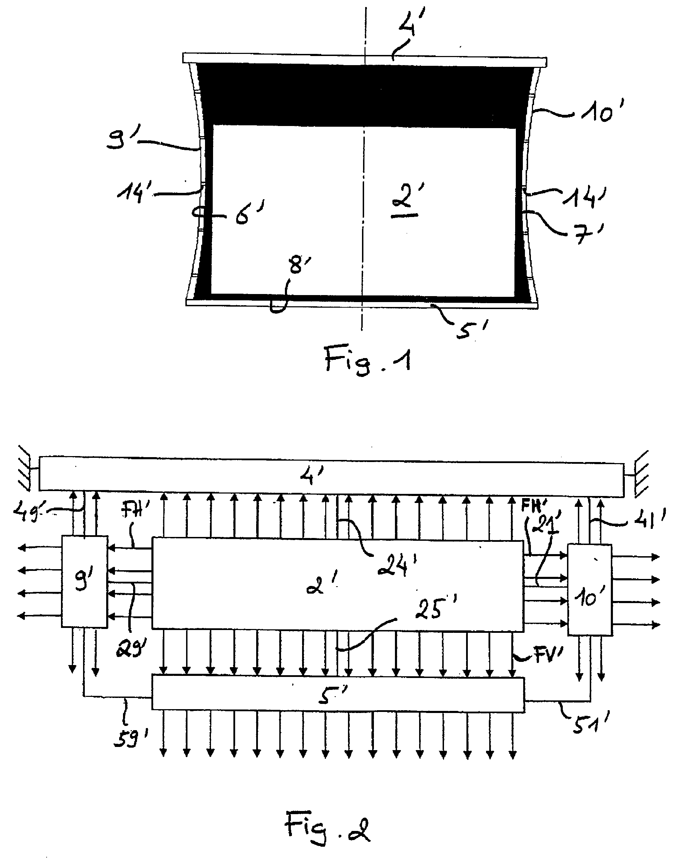

Une solution a été adoptée par de nombreux fabricants pour obtenir une meilleure planéité de la surface de projection en limitant notamment le risque d'ondulations des bords latéraux de la surface de projection. Cette solution, appelée communément "Tab Tensionning", consiste à soumettre la surface de projection à des forces de traction horizontales en plus des forces de traction verticales exercées par l'intermédiaire de la barre de lestage. La figure 1 est une vue de face d'un écran de projection déroulant de type "Tab Tensionning", tel qu'il en existe dans l'état de la technique. La figure 2 est une vue schématique des liaisons mécaniques 49', 29', 59', 24', 25', 51', 21' et 41' et des répartitions des forces (illustrées par des flèches) entre les différents organes de l'écran de projection de la figure 1. Comme illustré à la figure 1, deux câbles 9', 10' (ou filins) sont reliés aux bords latéraux 6', 7' de la surface de projection 2' par des éléments d'attache 14' ou des éléments de guidage (par exemple des oeillets), de telle sorte que chaque câble 9', 10' s'étend selon une ligne en arc de cercle à l'état déroulé de la surface de projection 2'. L'extrémité supérieure de chaque câble 9', 10' est reliée directement à une extrémité du rouleau 4' support de la surface de projection et l'extrémité inférieure de chaque câble 9', 10' est reliée à la barre de lestage 5' du bord longitudinal inférieur 8' de la surface de projection. Sous l'effet du poids de la barre de lestage 5', chaque câble 9', 10' est tendu, ce qui entraîne une augmentation du rayon de l'arc de cercle formé par chaque câble 9', 10' et, ainsi, l'exercice de forces de traction horizontales FH' le long des bords latéraux 6', 7' de la surface de projection. L'agencement de chaque câble 9', 10' en arc de cercle permet d'obtenir une répartition homogène des forces de traction horizontale le long du bord latéral 6', 7' correspondant.

Cependant, avec une telle solution, une partie du poids de la barre de lestage 5' est reprise par le bord longitudinal inférieur 8' de la surface de projection et l'autre partie du poids est reprise par les câbles 9', 10'. En effet, comme schématisé par les liaisons mécaniques 25', 59' et 51' à la figure 2, la barre de lestage 5' est reliée mécaniquement, d'une part, aux câbles 9', 10' et, d'autre part, au bord longitudinal inférieur 8' de la surface de projection. Il en résulte que les forces de traction horizontales FH' exercées sur les bords latéraux 6', 7' de la surface de projection, résultant de la mise en tension des câbles, sont couplées aux forces de traction verticales FV exercées par la barre de lestage sur le bord longitudinal 8' inférieur de la surface de projection. Autrement dit, une telle solution ne permet pas d'ajuster lesdites forces de traction horizontales indépendamment des forces de traction verticales exercées sur la surface de projection.

Si une telle solution peut suffire à tendre des surfaces de projection de coefficient d'élasticité élevé, cette solution ne convient pas pour tendre correctement une surface de projection d'élasticité plus faible. En effet, pour tendre correctement une surface de projection dite à faible élasticité, il est nécessaire d'augmenter les forces de traction horizontales sur les bords latéraux de la surface de projection et donc d'augmenter les forces de traction verticales exercées sur les extrémités des câbles. Il peut alors être prévu d'augmenter le poids de la barre de lestage. Cependant, dans le cas d'un écran enroulable, la barre de lestage étant reliée au bord longitudinal inférieur de la surface de projection elle-même reliée au rouleau, le poids de la barre de lestage est en partie repris par ledit rouleau qui fléchit alors en son centre sous l'augmentation du poids de la barre de lestage. Le problème de flexion du rouleau peut être limité en augmentant le diamètre et/ou l'épaisseur du rouleau, mais cette solution pose des problèmes d'encombrement du rouleau à l'intérieur du carter de protection qui loge ledit rouleau. En outre, un poids trop important de la barre de lestage risque de détériorer la surface de projection, voire même de la déchirer.

Il est également connu du document W02006077083 une autre solution de type « Tab Tensionning » selon laquelle chaque extrémité inférieure de câble est reliée à un élément pesant, de faible longueur, qui est lui-même lié à pivotement à une extrémité de la barre de lestage par une liaison de type charnière. Un tel système rend possible l'ajustement de la tension des câbles en permettant l'application, à l'extrémité inférieure de chacun des câbles, d'une charge différente de la charge appliquée au bord longitudinal inférieur de la surface de projection. Cependant, du fait de la liaison pivot entre chaque élément pesant et la barre de lestage, une partie du poids de chaque élément pesant est repris par ladite barre de lestage. Le poids de l'élément pesant relié à chaque câble a ainsi une incidence sur les forces de traction verticales exercées par la barre de lestage sur la surface de projection. Les forces de traction verticales exercées sur la surface de projection ne sont donc pas indépendantes des forces de traction horizontales exercées sur ladite surface de projection, ce qui complique l'ajustement en tension de la toile. Il en résulte que l'obtention d'une bonne planéité de la surface de projection est encore difficilement maîtrisable avec une telle solution.

En outre, les deux éléments pesants étant reliés aux extrémités de la barre de lestage, la longueur de ces éléments doit être limitée pour ne pas augmenter l'encombrement en largeur de l'écran et ne pas gêner l'enroulement de la surface de projection. Il en résulte que le poids de ces éléments pesants est limité et ne permet pas toujours d'exercer des forces de traction horizontales suffisantes sur les bords latéraux de la surface de projection. Quand bien même le poids desdits éléments pesants serait suffisant pour tendre correctement les câbles, la surface de projection risquerait de souffrir de l'augmentation des forces de traction verticales qui résulteraient d'une reprise d'une partie du poids des deux éléments pesants par la barre de lestage au niveau de la liaison pivot.

Le document DE-44 00 278 décrit dans son mode de réalisation illustré à la figure 4 un écran de projection présentant une toile dont le bord inférieur est tendu à l'aide d'une barre de lestage, et dont les bords latéraux sont reliés l'un à l'autre par un filin équipé d'un système de tension formé de ressorts et de poulies de renvoi logés dans le sol. Ce sont les ressorts qui permettent d'exercer un effort de traction sur les filins. Ainsi, c'est l'étirement des ressorts, compte tenu de leur raideur, qui permet d'appliquer une force de traction au filin relié aux bords latéraux de la toile. Un tel système nécessite de prévoir des points d'ancrage ou de retenue des ressorts, extérieurs à l'écran. Ainsi, dans le document DE-44 00 278, ces points d'ancrage ou de retenue des ressorts sont formés par les poulies fixées dans un logement ménagé dans le sol, en dessous de la toile d'écran pour masquer ces poulies et les ressorts du système de tension des filins. L'utilisation de ressorts pour la conception du système de tension du filin n'est pas fiable du fait que la raideur des ressorts est susceptible d'évoluer dans le temps. Ainsi, au bout d'un certain temps de fonctionnement, le système doit être re-réglé pour appliquer la force de rappel souhaitée au filin et finalement les ressorts doivent être changés. En outre, un tel système à ressorts n'est pas esthétique puisque les ressorts s'étendent sous l'écran jusqu'à leur zone d'ancrage ou de retenue.

La présente invention a pour but de proposer un écran de projection, de préférence déroulant, comportant une surface de projection dont la conformité avec la forme de la surface de projection recherchée est améliorée en position d'utilisation. Autrement dit, le but de l'invention est de permettre que la surface de projection présente, en position d'utilisation, une forme régulière correspondant à la forme recherchée, plane ou courbe.

Un autre but de l'invention est de limiter le risque de gondolement des bords latéraux de la surface de projection, sans avoir à augmenter les forces de traction verticales exercées sur ladite surface de projection.

Un autre but de l'invention est de proposer un écran de projection pour lequel les moyens utilisés pour tendre les bords latéraux de la surface de projection sont fiables en fonctionnement et simples à mettre en oeuvre.

A cet effet, l'invention concerne un écran de projection comportant les caracteristiques selon la revendication independante 1.

L'écran de projection selon l'invention peut être fixe ou de type déroulant. L'écran peut en outre être du type "plan" ou "courbe".

Par comparaison avec les écrans de l'état de la technique, en position d'utilisation de l'écran selon l'invention, les moyens de lestage pour l'exercice de forces de traction verticales ne sont plus reliés à contact d'appui aux moyens de lestage pour l'exercice de forces de traction horizontales, de manière à éviter qu'en position d'utilisation lesdits moyens de lestage du bord longitudinal inférieur de la surface de projection soient soumis au poids des moyens de lestage des extrémités inférieures des éléments longilignes déformables. Une telle conception de l'écran permet ainsi d'accroître les forces de traction horizontales en augmentant le poids des moyens de lestage desdits éléments longilignes sans avoir à augmenter le poids des moyens de lestage du bord longitudinal inférieur de la surface de projection.

Les actions de lestage desdits moyens de lestage sur, respectivement, les éléments longilignes déformables et sur le bord longitudinal inférieur de la surface de projection étant indépendantes, les forces de traction horizontales et verticales s'exerçant sur la surface de projection sont découplées, ce qui permet de faire varier lesdites forces de traction horizontales indépendamment desdites forces de traction verticales.

Autrement dit, une telle conception de l'écran permet de régler ou ajuster les forces de traction horizontales exercées sur les bords latéraux de la surface de projection indépendamment des forces de traction verticales exercées sur les bords longitudinaux de ladite surface de projection.

Ainsi, le fait de pouvoir exercer sur la surface de projection des forces de traction horizontales indépendamment des forces de traction verticales, permet d'obtenir une surface de projection tendue qui présente une forme régulière correspondant à la forme recherchée, plane ou courbe.

En outre, grâce à une telle conception de l'écran et des moyens de lestage, l'encombrement en longueur de l'écran n'est pas augmenté.

Lorsque les moyens de maintien à l'état suspendu de la surface de projection sont formés par un élément allongé, tel qu'un rouleau (ou une barre), encastré à ses extrémités et lorsque les éléments longilignes déformables sont reliés aux portions du rouleau proches desdites extrémités encastrées, le risque de flexion du rouleau en son centre est réduit. En effet, le poids des moyens de lestage des éléments longilignes déformables est principalement repris par lesdites portions du rouleau situées à proximité des extrémités encastrées. Les moyens de lestage reliés au bord longitudinal inférieur de la surface de projection, et donc reliés indirectement au rouleau, ne reprennent plus, en position d'utilisation de l'écran, le poids des moyens de lestage des éléments longilignes déformables. Le risque de déchirement ou de dégradation de la surface de projection est ainsi également réduit.

Par moyen(s) de lestage, on entend des moyens pesants qui exercent, par leur simple poids, une force de traction sur le ou les éléments au(x)quel(s) ils sont fixés. Autrement dit, la force de traction appliquée au(x)dit(s) élément(s) par les moyens de lestage résulte uniquement de la force de gravité appliquée à la masse desdits moyens de lestage suspendus au(x)dit(s) élément(s).

Ainsi, le simple poids des moyens de lestage appliqué à, ou au voisinage de, l'extrémité inférieure des éléments longilignes, tels que câble ou filin, suffit à tendre ces éléments longilignes et à exercer une force de traction horizontale sur les bords latéraux de la surface de projection auxquels sont reliés lesdits éléments longilignes. Il n'est donc pas besoin d'utiliser de système de tension à ressort, tels qu'il en existe dans l'état de la technique, qui sont complexes à mettre en oeuvre et peu fiables en fonctionnement du fait de l'usure des ressorts. Les moyens de lestage de l'écran selon l'invention exercent par gravité une force constante dans le temps sur les éléments longilignes reliés aux bords latéraux de la surface de projection, et de tels moyens de lestage ne sont pas soumis à l'usure. En outre, ces moyens de lestage ne nécessitent pas de zone d'ancrage externe à l'écran, puisqu'il suffit de les suspendre au(x)dit(s) élément(s) au(x)quel(s) on souhaite appliquer une force de traction, ce qui simplifie leur montage et ne pénalise pas l'esthétique de l'écran.

Selon une caractéristique avantageuse de l'invention, les moyens de lestage fixés à, ou au voisinage de, l'extrémité inférieure d'un des éléments longilignes déformables sont couplés aux moyens de lestage fixés à, ou au voisinage de, l'extrémité inférieure d'un autre desdits éléments longilignes pour former un ensemble solidaire en déplacement selon la direction verticale.

Selon une caractéristique avantageuse de l'invention, les moyens de lestage fixés au, ou au voisinage du, bord longitudinal inférieur de la surface de projection sont formés par une barre de lestage s'étendant sensiblement parallèlement audit bord longitudinal inférieur et les moyens de lestage fixés aux, ou au voisinage des, extrémités inférieures des éléments longilignes déformables sont formés par une autre barre de lestage reliant entre elles les extrémités inférieures desdits éléments et s'étendant sensiblement parallèlement à la barre de lestage du bord longitudinal inférieur de la surface de projection.

L'utilisation d'une barre de lestage reliant les extrémités inférieures des éléments longilignes permet d'exercer des forces de traction importantes sur lesdits éléments longilignes, tout en limitant l'encombrement en largeur de l'écran. En outre, les moyens de lestage des éléments longilignes étant formés par une même barre, le poids de ladite barre est repris de manière homogène par chacun desdits éléments longilignes, ce qui simplifie le réglage en tension horizontale de la surface de projection. De manière similaire, l'utilisation d'une autre barre de lestage reliée au bord longitudinal de la surface de projection permet d'exercer sur celle-ci des forces de traction verticales réparties de manière homogène.

Selon une caractéristique avantageuse de l'invention, les moyens de lestage fixés aux, ou au voisinage des, extrémités des éléments longilignes déformables sont formés par une barre creuse à l'intérieur de laquelle sont logés, avec jeu vertical en position d'utilisation de l'écran, lesdits moyens de lestage du bord longitudinal inférieur de la surface de projection, ces moyens de lestage du bord longitudinal inférieur de la surface de projection étant de préférence formés par une barre de lestage.

Selon une caractéristique avantageuse de l'invention, il est prévu des moyens de réglage du niveau des moyens de lestage pour l'exercice de forces de traction horizontales par rapport aux moyens de lestage pour l'exercice de forces de traction verticales, de telle sorte qu'en position d'utilisation souhaitée de la surface de projection, lesdits moyens de lestage pour l'exercice de forces de traction horizontales et lesdits moyens de lestage pour l'exercice de forces de traction verticales sont libres de contact d'appui ou de retenue vertical entre eux.

Selon un mode de réalisation préféré de l'invention, l'écran est de type déroulant. Lesdits moyens de maintien à l'état suspendu de la surface de projection sont formés par un rouleau autour duquel la surface de projection, est enroulable et déroulable. Lesdits moyens de lestage pour l'exercice de forces de traction horizontales et lesdits moyens de lestage pour l'exercice de forces de traction verticales sont distincts et montés à action de lestage indépendante en au moins une position au moins partiellement déroulée de la surface de projection correspondant à la ou l'une desdites positions d'utilisation.

Un écran déroulant permet à l'utilisateur de faire varier la longueur de déroulement de la surface de projection en fonction du format de la surface de projection souhaité. La longueur de déroulement de la surface de projection choisie par l'utilisateur pour obtenir un format donné correspond à une position d'utilisation de l'écran.

Selon une caractéristique avantageuse de l'invention, lesdits moyens de lestage pour l'exercice de forces de traction horizontales et lesdits moyens de lestage pour l'exercice de forces de traction verticales sont animés d'un déplacement relatif axial suivant la direction d'enroulement et de déroulement pour occuper au moins deux positions, l'une dans laquelle les moyens de lestage pour l'exercice de forces de traction horizontales et les moyens de lestage pour l'exercice de forces de traction verticales sont libres de contact d'appui ou de retenue vertical entre eux et l'autre dans laquelle les moyens de lestage pour l'exercice de forces de traction horizontales et les moyens de lestage pour l'exercice de forces de traction verticales viennent en contact d'appui ou de retenue vertical, les parties desdits moyens de lestage venant en contact formant moyens d'entraînement en déplacement vertical des moyens de lestage des éléments longilignes déformables, lesdits moyens d'entraînement étant actifs lors de la phase d'enroulement sur une portion de la course d'enroulement de la surface de projection.

Selon un mode de réalisation particulier de l'invention, du type dans lequel les moyens de lestage des éléments longilignes déformables et les moyens de lestage du bord longitudinal inférieur de la surface de projection sont respectivement formés, les uns, par une barre de lestage creuse, dite barre de traction horizontale, et, les autres, par une autre barre de lestage dite de traction verticale, ladite barre de traction verticale étant logée, avec jeu vertical en position d'utilisation, à l'intérieur de la barre de traction horizontale, lesdits moyens d'entraînement sont formés par une surface d'appui intérieure de ladite barre de traction horizontale apte à coopérer avec une surface d'appui extérieure de la barre de traction verticale.

Ainsi, les surfaces d'appui des barres destinées à venir en contact forment des appuis plans permettant de limiter le jeu vertical entre les deux barres lors de l'enroulement de la surface de projection autour du rouleau. Grâce à ces appuis plans, lors de la remontée de la barre dite de traction verticale, la barre dite de traction horizontale est entraînée par la barre de traction verticale qui reprend une partie de son poids. Les éléments longilignes déformables, ou câbles, sont ainsi soulagés en tension, ce qui supprime les forces de traction horizontales sur les bords latéraux de la surface de projection de manière à permettre son bon enroulement.

Selon un autre mode de réalisation particulier de l'invention, du type dans lequel les moyens de lestage des éléments longilignes déformables et les moyens de lestage du bord longitudinal inférieur de la surface de projection sont respectivement formés, les uns, par une barre de lestage creuse, dite barre de traction horizontale, et, les autres, par une autre barre de lestage dite de traction verticale, ladite barre de traction verticale étant logée, avec jeu vertical en position d'utilisation, à l'intérieur de la barre de traction horizontale, lesdits moyens d'entraînement sont formés par des jeux d'organes de type mâle et femelle, lesdits organes de type mâle et femelle étant portés, indifféremment, les uns, par les parties d'extrémité de la barre de traction horizontale, et, les autres, par les parties d'extrémité de la barre de traction verticale, lesdits organes mâle et femelle étant animés d'un déplacement relatif axial suivant la direction d'enroulement et de déroulement pour occuper au moins deux positions, l'une dans laquelle lesdits organes de type mâle et femelle sont libres de contact d'appui ou de retenue vertical entre eux et l'autre dans laquelle les organes de type mâle et femelle viennent en contact d'appui ou de retenue vertical entre eux.

L'invention sera bien comprise à la lecture de la description suivante d'exemples de réalisation, en référence aux dessins annexés dans lesquels :
- la figure 1 est une vue de face d'un écran de projection déroulant de type "Tab Tensionning", tel qu'il en existe dans l'état de la technique ;
- la figure 2 est une vue schématique des liaisons mécaniques et des répartitions des forces entre les différents organes de l'écran de projection de la figure 1 ;
- la figure 3 est une vue de face d'un écran de projection déroulant selon l'invention ;
- la figure 4 est une vue schématique des liaisons mécaniques et des répartitions de forces entre les différents organes de l'écran de projection de la figure 3 ;
- la figure 5 est une vue partielle en coupe transversale d'un écran de projection selon un mode de réalisation préférentiel de l'invention, ladite vue montrant les positions relatives des barres de lestage de l'écran en position d'utilisation dudit écran ;
- la figure 6 est une vue partielle en coupe transversale de l'écran de projection de la figure 5, ladite vue montrant les positions relatives des barres de lestage de l'écran lors de la phase d'enroulement dudit écran ;
- la figure 7 est une vue en perspective des embouts d'extrémité des barres de lestage suivant une variante de réalisation de l'écran selon l'invention, ladite vue montrant les positions relatives des embouts d'extrémité des barres de lestage en position d'utilisation dudit écran ;
- la figure 8 est une vue en perspective des embouts d'extrémité des barres de lestage de la figure 7, ladite vue montrant les positions relatives des embouts d'extrémité des barres de lestage lors de la phase d'enroulement dudit écran.

Dans la description qui suit, les termes "horizontal" et "vertical" sont utilisés en référence à une configuration déroulée de l'écran. Dans les exemples illustrés l'écran de projection est de type déroulant. Bien entendu l'invention s'applique également à un écran fixe. Dans l'exemple illustré aux figures, l'écran est dit "plat", c'est-à-dire qu'en position d'utilisation, la surface de projection déroulée doit être plane. En variante, l'écran selon l'invention peut être un écran dit "courbe", la surface de projection devant alors, en position d'utilisation, présenter une certaine courbure.

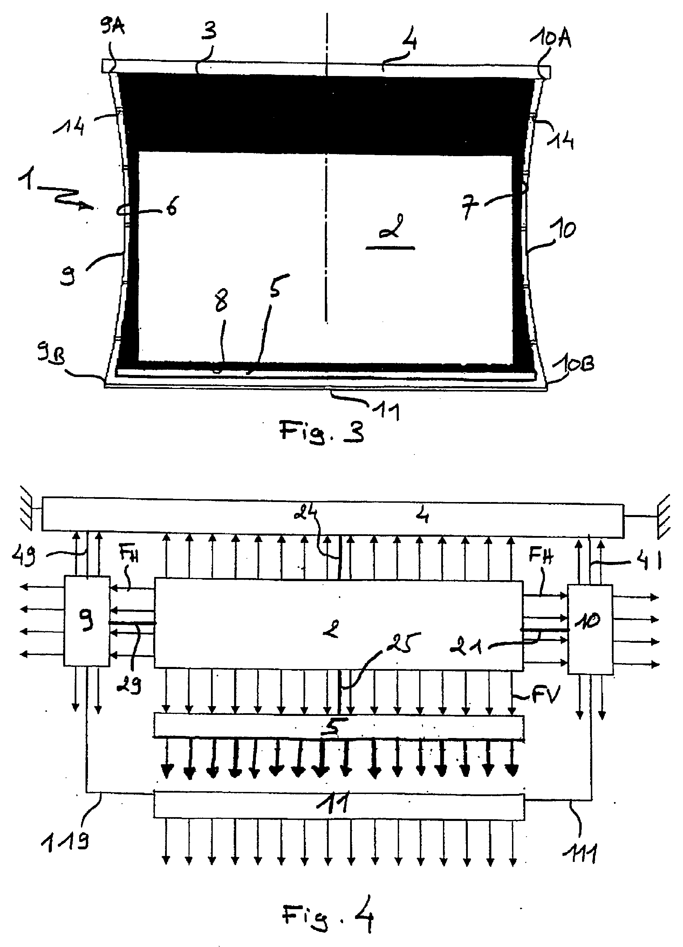

A la figure 3, on a représenté un écran de projection 1 déroulant, s'étendant sensiblement verticalement à l'état déroulé. Ledit écran comporte une surface de projection 2 enroulable/déroulable, de forme généralement rectangulaire, présentant à l'état déroulé deux bords longitudinaux 8, 3 inférieur et supérieur sensiblement horizontaux et deux bords latéraux 6, 7 sensiblement verticaux. Ladite surface de projection 2 est enroulable autour d'un rouleau 4 monté pivotant autour d'un axe de rotation et logé dans un carter de protection (non représenté) qui forme élément d'encastrement des extrémités de l'axe de rotation du rouleau. Le carter de protection est généralement fixé au plafond ou au mur d'une salle.

Le carter de protection loge également la surface de projection 2 à l'état enroulé autour du rouleau 4. De préférence, l'enroulement et le déroulement de l'écran se font par l'intermédiaire d'un moteur électrique d'entraînement en rotation du rouleau 4. En variante, on peut prévoir de remplacer le moteur électrique par un dispositif mécanique manuel.

Dans l'exemple illustré aux figures, ladite surface de projection est formée d'une toile tissée à base de fils en fibre de verre enduits de PVC, ladite toile étant dite à faible élasticité.

Ledit écran de projection 1 comporte en outre des moyens d'exercice de forces de traction verticales FV sur la surface de projection 2 formés de moyens de lestage 5 fixés au, ou au voisinage du, bord longitudinal 8 inférieur de la surface de projection 2.

Il est également prévu des moyens d'exercice 9, 10, 11 de forces de traction horizontales FH sur la surface de projection 2 qui comprennent deux éléments 9, 10 longilignes déformables, tels que câbles ou filins. Chaque élément 9, 10, raccordé audit rouleau 4 par son extrémité supérieure 9A, 10A, est en outre relié, en une pluralité de points, à un des bords latéraux 6, 7 de la surface de projection 2 et s'étend, à l'état relié au bord latéral 6, 7 correspondant, en arc de cercle de concavité tournée vers l'extérieur de la surface de projection 2. Comme illustré à la figure 3, lesdits moyens d'exercice de forces de traction horizontales FH comprennent également des moyens de lestage 11 fixés à, ou au voisinage de, l'extrémité inférieure 9B, 10B de chaque élément 9, 10 longiligne déformable. Les forces de traction horizontales FH sont sensiblement orthogonales à la direction de déroulement et d'enroulement de l'écran. Les éléments 9, 10 longilignes sont dits "déformables" au sens où ils peuvent changer de forme, par exemple de rayon de courbure. Dans l'exemple illustré aux figures, chaque élément 9, 10 longiligne déformable est un câble.

Les éléments 9, 10 longilignes peuvent également être extensibles, c'est-à-dire élastiquement déformables en longueur, ou non-extensibles. L'utilisation d'élément 9, 10 longiligne extensible a l'avantage de permettre, lors de la phase d'enroulement de la surface de projection, un rattrapage de la longueur d'enroulement de chaque élément longiligne 9, 10 qui s'enroule moins vite autour du rouleau 4 que la surface de projection 2. En effet, la surface de projection 2 s'enroulant autour d'elle-même son diamètre d'enroulement augmente au cours de la phase d'enroulement, contrairement au diamètre d'enroulement de chaque élément longiligne 9, 10 qui reste sensiblement constant puisqu'il s'enroule sur une portion du rouleau 4 et non pas sur lui-même. Bien entendu, dans ce cas, une partie des efforts exercés par les moyens de lestage 11 est utilisée pour l'allongement élastique desdits éléments longilignes.

De manière caractéristique à l'invention, lesdits moyens de lestage 11 pour l'exercice de forces de traction horizontales FH et lesdits moyens de lestage 5 pour l'exercice de forces de traction verticales FV sont distincts et sont montés à action de lestage indépendante en au moins une position correspondant à ladite ou l'une desdites positions d'utilisation. La direction d'enroulement et de déroulement correspond sensiblement à la verticale.

Pour un écran fixe, une seule position d'utilisation de la surface de projection est disponible, ladite position d'utilisation correspondant à la position dans laquelle s'étend la surface de projection. Pour un écran déroulant, comme dans les exemples illustrés aux figures, l'utilisateur peut faire varier la longueur de déroulement de la surface de projection en fonction du format souhaité (par exemple 16 : 9 ; 2 : 35 ; ou 1 : 85). A chaque format correspond ainsi une position d'utilisation de la surface de projection.

Grâce à l'écran selon l'invention, en au moins une position d'utilisation de la surface de projection, les moyens de lestage pour l'exercice de traction verticale sont suspendus au bord longitudinal inférieur de la surface de projection et les moyens de lestage pour l'exercice de traction horizontale sont suspendus aux extrémités inférieures des éléments longilignes déformables, sans interférence entre lesdits moyens de lestage. Il en résulte que le poids des moyens de lestage des éléments longilignes déformables n'est pas repris, en position d'utilisation de l'écran, par les moyens de lestage du bord longitudinal inférieur de la surface de projection. Autrement dit, lesdites moyens de lestage 11 fixés aux câbles ne sont pas liés mécaniquement aux moyens de lestage 5 du bord longitudinal inférieur de la surface de projection, ce qui permet d'ajuster les forces de traction horizontales exercées sur la surface de projection indépendamment des forces de traction verticales exercées sur ladite surface de projection. Une telle conception de l'écran selon l'invention permet d'obtenir une meilleure planéité de la surface de projection en position d'utilisation.

Chaque câble 9, 10 étant raccordé par son extrémité supérieure 9B, 10B à, ou au voisinage de, une extrémité du rouleau 4 qui se situe à proximité de la liaison d'encastrement de l'axe de rotation du rouleau 4, le risque de flexion dudit rouleau 4 est limité. En outre, le poids des moyens de lestage 11 des câbles n'étant pas repris par les moyens de lestage 5 du bord longitudinal 8 inférieur de la surface de projection, les forces de traction verticales que subit le rouleau 4 sont réduites par comparaison à un écran de projection déroulant de l'état de la technique pour lequel les moyens de lestage des câbles et du bord longitudinal inférieur ne sont pas indépendants.

Comme illustré à la figure 3, les moyens de lestage 5 fixés au, ou au voisinage du, bord longitudinal 8 inférieur de la surface de projection 2 sont formés par une barre de lestage s'étendant sensiblement parallèlement audit bord longitudinal 8 inférieur. Les moyens de lestage 11 fixés aux, ou au voisinage des, extrémités inférieures 9B, 10B des câbles 9, 10 sont formés par une autre barre de lestage reliant entre elles les extrémités inférieures 9B, 10B desdits câbles 9, 10 et s'étendant sensiblement parallèlement à la barre de lestage du bord longitudinal 8 inférieur de la surface de projection 2. Les barres de lestage 11, 5 sont de préférence en métal.

Ainsi, dans l'exemple illustré aux figures 3 à 9, les moyens de lestage fixés à l'extrémité inférieure 9B de l'élément 9 longiligne déformable sont communs aux moyens de lestage fixés à l'extrémité inférieure 10B de l'élément 10 longiligne. En variante, on peut prévoir que les moyens de lestage fixés à l'extrémité inférieure 9B de l'élément 9 longiligne déformable soient distincts des moyens de lestage fixés à l'extrémité inférieure 10B de l'élément 10 longiligne.

L'utilisation d'une barre de lestage reliant les extrémités des câbles pour les lester permet de former des moyens de lestage solidaires en déplacement selon la direction d'enroulement et de déroulement. Comme illustré à la figure 3, la barre de lestage 11 est plus longue que la barre de lestage 5 et ladite barre de lestage 11 est maintenue en équilibre seulement par ses liaisons aux extrémités inférieures des câbles.

Dans la représentation schématique, illustrée à la figure 4, des liaisons mécaniques entre les différents organes de l'écran et de la répartition des forces (illustrées par des flèches) entre ces organes, les traits référencés 21, 24, 25, 29, 41, 49, 111, 119 illustrent les liaisons mécaniques existantes entre les organes reliés par ces traits. Lesdits organes, qui comprennent la surface de projection 2, les éléments longilignes 9, 10 agencés en arc de cercle, le rouleau 4, et les barres de lestage 5 et 11, sont schématisées par des rectangles. Ainsi, via les liaisons d'attaches 24 et 25, le poids de la barre 5 est repris par la surface de projection 2 et les forces de traction verticales FV qui en résultent sont reprises par le rouleau 4. De même, via les liaisons d'attache 119 et 111 entre, d'une part, la barre 11 et, d'autre part, les câbles 9 et 10, le poids de la barre 11 est repris par les câbles 9, 10. Les câbles 9, 10 étant également rattachés (voir les liaisons 49 et 41) aux extrémités du rouleau 4 voisines des extrémités encastrées de l'axe de rotation du rouleau, lesdites extrémités de la barre 4 reprennent une partie des efforts subis par les câbles 9, 10. En outre, sous le poids de la barre 11 chaque câble arqué se tend et exerce ainsi, via les liaisons d'attache 21, 29, des forces de traction horizontales sur les bords latéraux 6, 7 de la surface de projection 2.

Dans l'exemple illustré aux figures, chaque bord latéral 6, 7 de la surface de projection présente un profil en arc de cercle de concavité tournée vers l'extérieur de la surface de projection. Il est prévu de fixer des éléments d'attache 14 en une pluralité de points le long de chaque bord latéral 6, 7 pour relier chaque câble 9, 10 au bord latéral 6, 7 correspondant, par l'intermédiaire des éléments d'attache 14. Ces éléments d'attache 14 s'étendent sensiblement horizontalement en position d'utilisation de la surface de projection et sont sensiblement de même longueur. Une extrémité de ces éléments d'attache 14 est fixée à un bord latéral 6, 7 et l'autre extrémité est reliée au câble 9, 10 correspondant. L'élément d'attache 14 peut être solidarisé directement au bord latéral 6, 7 correspondant de la surface de projection 2 ou indirectement à l'aide d'une bande de renforcement (non représentée) fixée le long dudit bord latéral de la surface de projection. En variante, l'élément d'attache peut être remplacé par un élément de guidage tel qu'un oeillet ou anneau que le câble traverse. Quoi qu'il en soit, chaque bord latéral de la surface de projection étant arqué et les éléments d'attache ou de guidage étant sensiblement de même longueur, chaque câble, coopérant avec les éléments d'attache ou de guidage, s'étend également, en position d'utilisation de la surface de projection, selon un arc de cercle de concavité tournée vers l'extérieur de la surface de projection.

En variante, on peut prévoir que les bords latéraux de la surface de projection soient droits et que, pour chaque bord latéral, les longueurs des éléments d'attache croissent à mesure que l'on se déplace du centre de la surface de projection vers sa partie supérieure ou inférieure, de telle sorte que le câble associé à ces éléments d'attache s'étende en arc de cercle.

Comme rappelé ci-dessus, la forme en arc de cercle du câble permet, en tendant ledit câble grâce aux moyens de lestage 11, d'exercer des forces de traction horizontales FH sur la surface de projection. En outre, la régularité de la forme en arc de cercle de chaque câble et la répartition régulière des éléments d'attache le long du bord latéral de la surface de projection permet d'obtenir une bonne répartition des forces de traction horizontales le long du bord latéral correspondant de la surface de projection.

De préférence, la barre de lestage 11 pour l'exercice de forces de traction horizontales FH et la barre de lestage 5 pour l'exercice de forces de traction verticales FV sont animées d'un déplacement relatif axial suivant la direction d'enroulement et de déroulement pour occuper au moins deux positions, l'une dans laquelle lesdites barres 5, 11 sont libres de contact d'appui entre elles selon la direction verticale et l'autre dans laquelle lesdites barres 5, 11 viennent en contact d'appui selon la direction verticale, les parties desdites barres 5, 11 venant en contact formant moyens d'entraînement en déplacement vertical de la barre 11 par ladite barre 5.

Les moyens d'entraînement sont actifs lors de la phase d'enroulement sur une portion de la course d'enroulement de la surface de projection correspondant au moins à la portion de fin de course d'enroulement. Lesdits moyens d'entraînement permettent d'éviter l'apparition d'un écartement trop important entre les barres 5, 11 lors de la phase d'enroulement. En effet, en l'absence de moyens d'entraînement, la barre de lestage 11 reliée aux câbles 9, 10 remonte moins vite que celle 5 reliée au bord longitudinal 8 inférieur de la surface de projection et l'écartement entre elles ne cesse d'augmenter durant la phase d'enroulement, ce qui pose des problèmes d'encombrement des barres de lestage dans le carter. En outre, en l'absence de moyens d'entraînement, les câbles 9, 10 restent tendus pendant la phase d'enroulement, ce qui ne permet pas d'enrouler correctement la surface de projection 2.

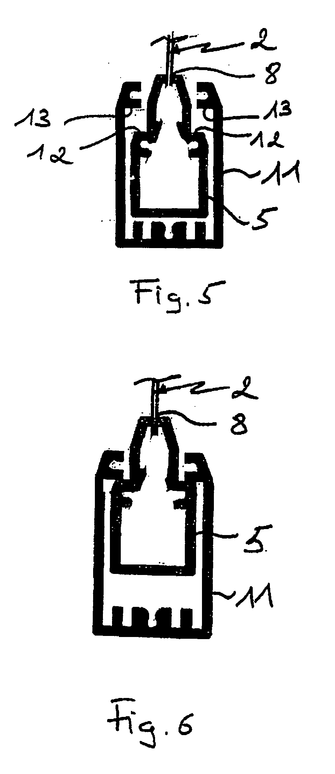

Selon un mode de réalisation préféré de l'invention illustré aux figures 5 et 6, la barre de lestage 11 des câbles 9, 10 est creuse et loge, avec jeu vertical en position d'utilisation de l'écran, la barre de lestage 5 du bord longitudinal 8 inférieur de la surface de projection 2. Dans l'exemple illustré aux figures 5 et 6, il est prévu des moyens d'entraînement de la barre de lestage 11 par la barre de lestage 5, tels que décrits ci-dessus. Lesdits moyens d'entraînement sont formés par une surface d'appui intérieure 13 de ladite barre de lestage 11 creuse apte à coopérer avec une surface d'appui extérieure 12 de la barre de lestage 5 logée dans la barre de lestage 11.

Dans l'exemple illustré à la figure 5, l'écran est déroulé et les barres de lestage sont libres l'une par rapport à l'autre. Autrement dit, lesdites barres de lestage 11 et 5 ne sont pas en contact d'appui ou de retenue vertical, ce qui, comme expliqué ci-dessus, permet à la barre de lestage 11, en coopération avec les câbles 9, 10, d'exercer des forces de traction horizontales sur la surface de projection. Comme illustré à la figure 6, lors de la phase d'enroulement, la barre de lestage 5 remonte plus vite que la barre de lestage 11 et vient alors, au-delà d'une certaine course d'enroulement, en butée par sa surface extérieure 12 contre la surface intérieure 13 de la barre de lestage 11 creuse. La barre de lestage 5 entraîne alors verticalement la barre de lestage 11, ce qui provoque la détente des câbles 9, 10. La surface de projection 2 n'est donc plus soumise en traction horizontale, ce qui permet d'enrouler correctement la surface de projection autour du rouleau 4.

Lors de la phase de déroulement, la barre de lestage 5 reliée au bord longitudinal inférieur 8 de la surface de projection descend plus rapidement que la barre de lestage 11 reliée aux câbles 9, 10. Les câbles 9, 10 se tendent alors automatiquement sous le poids de la barre de lestage 11 qui n'est pas retenue verticalement par la barre de lestage 5.

Le bord longitudinal 8 inférieur de la surface de projection 2 peut être relié à la barre de lestage 5 par l'intermédiaire d'une tige de liaison (non représentée) en aluminium de section transversale en V inversé en position d'utilisation de l'écran. Le bord longitudinal 8 inférieur de la surface de projection est solidarisé au sommet de la tige de liaison et le profil en V de ladite tige permet une bonne insertion de la tige de liaison dans la barre de lestage 5. La barre de lestage 5 se présente sous forme d'un profilé creux fendu longitudinalement, le profil en V inversé de la tige de liaison coopérant par le sommet du V avec ladite fente à l'état inséré de la tige de liaison dans la barre de lestage 5 pour permettre le maintien à l'état suspendu de la barre de lestage 5. L'utilisation d'une telle tige de liaison permet de relier aisément et correctement le bord longitudinal 8 inférieur de la surface de projection 2 à la barre de lestage 5.

Pour permettre le montage de la barre de lestage 5 à l'intérieur de la barre de lestage 11, la barre de lestage 11 est formée d'un tronçon principal ouvert à ses deux extrémités et de deux embouts 16 rapportés audites extrémités pour les refermer une fois la barre de lestage 5 insérée dans la barre de lestage 11. Chaque embout 16 formant une extrémité de la barre 11 est conçu pour recevoir l'extrémité inférieure d'un des câbles 9, 10.
Dans l'exemple illustré aux figures 5 et 6, les barres 5 et 11 sont conçues pour venir en contact d'appui au-delà d'une certaine course d'enroulement. En variante, on peut prévoir que lesdites barres ne viennent pas en contact d'appui mais en contact de retenue. En effet, on peut prévoir de relier verticalement entre elles les deux barres 5, 11 par un lien, tel qu'un fil, dont la longueur est choisie de telle sorte que, d'une part, en position d'utilisation de l'écran, ledit fil de liaison est totalement détendu, les barres étant ainsi libres verticalement l'une par rapport à l'autre et, d'autre part, lors de la phase d'enroulement, au-delà d'une certaine course d'enroulement, le fil de liaison est tendu sous l'effet de la remontée de la barre 5 qui entraîne et retient la barre 11.

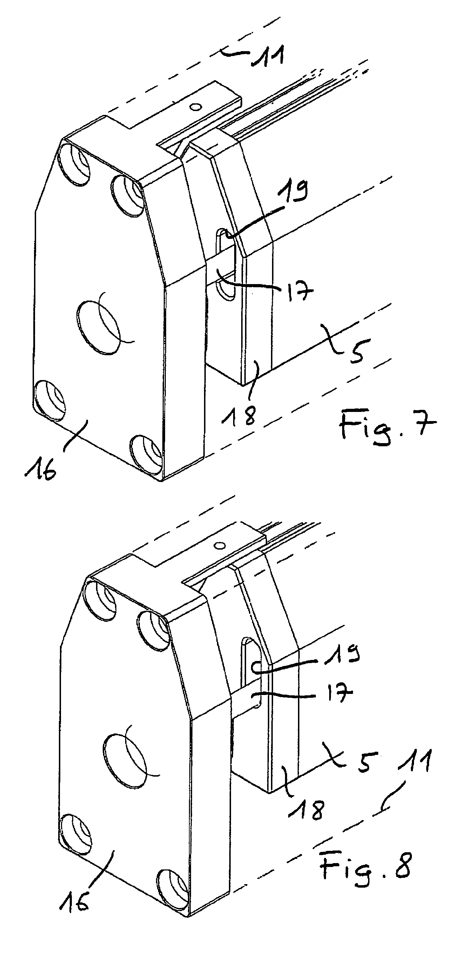

En variante du mode de réalisation illustré aux figures 5 et 6, on peut prévoir, comme illustré aux figures 7 et 8, que les moyens d'entraînement en déplacement de la barre 11, dite barre de traction horizontale, par la barre 5, dite barre de traction verticale, soient formés par des jeux d'organes de type mâle et femelle portés, indifféremment, les uns par les parties d'extrémité de la barre 11 de traction horizontale, et, les autres, par les parties d'extrémité de la barre 5 de traction verticale. Dans l'exemple illustré aux figures 7 et 8, les organes mâles sont formés par des tenons 17 portés par des embouts 16 venant fermer les extrémités ouvertes de la barre 11 creuse de traction horizontale et les organes femelles sont formés par des ouvertures 19, de forme oblongue, pratiquées dans des embouts 18 venant fermer les extrémités ouvertes de la barre 5 creuse de traction verticale. Les câbles 9, 10 sont reliés aux embouts 16 de la barre 11 de traction horizontale. A l'état introduit de la barre 5 de traction verticale à l'intérieur de la barre 11 de traction horizontale et à l'état rapporté des embouts 16, 18 aux extrémités desdites barres, les tenons 17 sont introduits dans les ouvertures 19. Grâce à la forme oblongue verticale de chaque ouverture 19, chaque tenon 17 introduit dans ladite ouverture 19 est susceptible d'être déplacé le long de cette ouverture 19. Dans l'exemple illustré à la figure 7, selon lequel l'écran est en position d'utilisation, les tenons 17 et les ouvertures 19 sont libres de contact d'appui vertical entre eux. Ainsi, de manière similaire au mode de réalisation illustré à la figure 5, les barres de lestage 11 et 5 ne sont pas en contact d'appui vertical, ce qui permet à la barre de lestage 11, en coopération avec les câbles 9, 10, d'exercer des forces de traction horizontales sur la surface de projection. A l'inverse, dans l'exemple illustré à la figure 8, lors de la phase d'enroulement, le bord intérieur de chaque ouverture 19 vient en contact d'appui vertical avec le tenon 17 correspondant. De manière similaire au mode de réalisation de la figure 6, la barre de lestage 5 entraîne alors verticalement la barre de lestage 11, ce qui provoque la détente des câbles 9, 10. La surface de projection 2 n'est donc plus soumise en traction horizontale, ce qui permet d'enrouler correctement la surface de projection autour du rouleau 4.

Dans l'exemple illustré aux figures 7 et 8, chaque embout 16 d'extrémité de la barre 11 porte deux tenons 17 qui coopèrent avec deux ouvertures 19 oblongues pratiquées dans l'embout 18 d'extrémité correspondant de la barre 5. L'utilisation de deux jeux d'organes mâle et femelle à chacune des extrémités des barres permet d'empêcher la rotation relative des deux barres. En outre, une telle conception des moyens d'entraînement de la barre 11 par la barre 5 permet de limiter le jeu des barres entre elles, transversalement à la direction d'enroulement et de déroulement et à la direction de l'axe de chacune des barres. En variante, on pourrait envisager que les organes de type femelle soient disposés sur les embouts d'extrémité de la barre de traction horizontale et que les organes de type mâle soient disposés sur les embouts d'extrémité de la barre de traction verticale.

Selon une variante de réalisation (non illustrée) de l'exemple illustré aux figures 7 et 8, dans laquelle la barre 5 de traction verticale est également formée d'un corps profilé et de deux embouts d'extrémité 18, et la barre 11 de traction horizontale est formée également d'un corps profilé et de deux embouts d'extrémité 16, lesdits moyens d'entraînement en déplacement de la barre de traction horizontale par la barre de traction verticale sont formés par des appuis plans ménagés à chaque extrémité des barres, d'une part, sur une partie de l'embout 18 de la barre 5 de traction verticale et, d'autre part, sur une partie de l'embout 16 de la barre 11 de traction horizontale. De préférence, l'appui plan ménagé sur chaque embout 18 de la barre 5 de traction verticale est formée par la face extérieure de la paroi supérieure de l'embout 18 et l'appui plan ménagé sur chaque embout 16 de la barre 11 de traction horizontale est formé par la face intérieure de la paroi supérieure de l'embout 16. En effet, les corps profilés des barres étant de grande longueur, ils présentent une structure linéaire imparfaite, c'est-à-dire une irrégularité de côtes, qui ne permet pas de maîtriser de manière fiable l'entraînement en déplacement de la barre 11 de traction horizontale par la barre 5 de traction verticale. A l'inverse, les embouts 16, 18 étant de faible longueur comparée aux barres, les côtes souhaitées pour ces embouts 16, 18 peuvent être obtenues avec une grande précision. En particulier, on peut prévoir que les embouts 18 soient dimensionnés de telle sorte que la partie supérieure du corps profilé de la barre 5 de traction verticale s'étende en retrait des embouts 18 de sorte que lorsque les barres 5, 11 sont en contact d'appui pour la phase d'enroulement, le contact d'appui s'effectue entre les appuis plans des embouts 16, 18 tandis que les corps profilés des deux barres ne se touchent pas.

Préférentiellement, il est prévu de limiter le jeu latéral entre les barres 5, 11 selon la direction transversale à la direction d'enroulement et à la direction axiale des barres, non pas à l'aide de tenons (figures 7 et 8) mais en concevant, d'une part, les embouts 18 de telle sorte que leur dimension selon ladite direction transversale soit suffisante pour limiter ledit jeu latéral entre les deux barres 5, 11 et, d'autre part, en laissant un jeu suffisant entre les corps profilés des deux barres selon ladite direction transversale pour limiter le risque de coincement entre les deux barres 5, 11 lors du montage de la barre 5 à l'intérieur de la barre 11. En effet, comme rappelé ci-dessus, les corps profilés de grande longueur des deux barres 5,11 présentent une structure linéaire imparfaite, à l'inverse des embouts 18 dont les côtes souhaitées peuvent être obtenues avec précision. On peut prévoir ainsi que la dimension des embouts 18 selon ladite direction transversale soit supérieure à la dimension du corps profilé de la barre 5 selon cette direction transversale, tout en étant de dimension juste inférieure, selon ladite direction transversale, à la dimension du logement délimité par la barre 11 creuse pour l'introduction de la barre 5, de manière à réduire au minimum le jeu latéral entre les deux barres 5, 11. La dimension transversale de chaque embout 18 de la barre 5 est ainsi choisie pour être apte à limiter le jeu latéral (ou transversal) entre les barres 5, 11.

Avantageusement, l'écran comporte en outre des moyens de réglage (non représenté) du niveau de la barre de traction horizontale 11 par rapport à la barre 5 de traction verticale, de telle sorte qu'en position d'utilisation souhaitée de la surface de projection 2, la barre de traction horizontale 11 et la barre 5 de traction verticale sont libres de contact d'appui ou de retenue vertical entre elles. Ces moyens de réglage sont formés, pour chaque câble 9, 10, par un mécanisme associé à la barre de traction horizontale 11 qui comprend de manière classique une roue à laquelle est fixée une extrémité du câble et une vis permettant de faire tourner la roue. La roue comporte également une gorge périphérique le long de laquelle le câble peut s'enrouler et se dérouler lorsque la roue est tournée dans un sens et dans l'autre. Les moyens de réglage comportent également des moyens de blocage en position de la roue formés par une partie mâle apte à coopérer avec une partie femelle pour bloquer la roue en rotation. Ces moyens de blocage sont désactivables par appui sur la vis, ce qui permet à la partie mâle d'être écartée par rapport à la partie femelle. Un ressort permet de rappeler la roue en position bloquée. De préférence, chaque mécanisme est logé dans l'un des embouts 16 d'extrémité de la barre de lestage horizontale.

Lorsque l'utilisateur déroule la surface de projection d'une longueur correspondant à la position d'utilisation souhaitée, il se peut que les barres 5, 11 de traction soient en contact d'appui. Dans ce cas, l'utilisateur agit sur la vis de chacun des mécanismes de réglage pour régler la longueur l'enroulement du câble 9, 10 correspondant autour de la roue et positionner ainsi la barre de traction horizontale à un niveau selon lequel lesdites barres sont libres de contact d'appui ou de retenue vertical et exercent ainsi des actions de lestage indépendantes.

## Revendications

1. Ecran de projection (1) comportant :
- une surface de projection (2), de forme généralement rectangulaire, présentant deux bords longitudinaux (8, 3) inférieur et supérieur sensiblement horizontaux et deux bords latéraux (6, 7), ladite surface, apte à être tendue, s'étendant au moins partiellement dans un plan sensiblement vertical en au moins une position d'utilisation,
- des moyens de maintien (4) à l'état suspendu de la surface de projection (2) dans ladite au moins une position d'utilisation, lesdits moyens de maintien (4) étant raccordés au bord longitudinal (3) supérieur de la surface de projection,
- des moyens d'exercice de forces de traction verticales (FV) sur la surface de projection (2) comprenant au moins des premiers moyens de lestage (5) fixés au, ou au voisinage du, bord longitudinal (8) inférieur de la surface de projection (2),
- des moyens d'exercice (9, 10, 11) de forces de traction horizontales (FH) sur la surface de projection (2), lesdits moyens d'exercice comprenant au moins, d'une part, des seconds moyens de lestage (11), et, d'autre part, deux éléments (9, 10) longilignes déformables, tels que câbles ou filins, chaque élément (9, 10), raccordé à, ou au voisinage de, son extrémité supérieure (9A, 10A) auxdits moyens de maintien (4) et à, ou au voisinage de, son extrémité inférieure (9B, 10B) auxdits moyens de lestage (11), étant en outre relié à un des bords latéraux (6, 7) de la surface de projection (2), chaque élément (9, 10) longiligne étant agencé pour appliquer au bord latéral (6, 7) correspondant de la surface de projection la charge desdits moyens de lestage (11) associés sous forme de forces de traction horizontales (FH)
**caractérisé en ce que** lesdits seconds moyens de lestage (11) pour l'exercice de forces de traction horizontales (FH) et lesdits premiers moyens de lestage (5) pour l'exercice de forces de traction verticales (FV) sont distincts et montés à action de lestage indépendante en au moins une position correspondant à ladite ou l'une desdites positions d'utilisation, lesdits seconds moyens de lestage (11) pour l'exercice de forces de traction horizontales (FH) étant des moyens pesants qui exercent, par leur simple poids, une force de traction sur les éléments longilignes (9, 10) auxquels ils sont fixés.

2. Ecran de projection (1) selon la revendication 1, **caractérisé en ce que** les seconds moyens de lestage (11) fixés à, ou au voisinage de, l'extrémité inférieure (9B, 10B) d'un des éléments (9, 10) longilignes déformables sont couplés aux seconds moyens de lestage (11) fixés à, ou au voisinage de, l'extrémité inférieure (9B, 10B) d'un autre desdits éléments (9, 10) longilignes pour former un ensemble solidaire en déplacement selon la direction verticale.

3. Ecran de projection (1) selon l'une des revendications précédentes, **caractérisé en ce que** les premiers moyens de lestage (5) fixés au, ou au voisinage du, bord longitudinal (8) inférieur de la surface de projection (2) sont formés par une barre de lestage s'étendant sensiblement parallèlement audit bord longitudinal (8) inférieur et **en ce que** les moyens de lestage (11) fixés aux, ou au voisinage des, extrémités inférieures (9B, 10B) des éléments (9, 10) longilignes déformables sont formés par une autre barre de lestage reliant entre elles les extrémités inférieures (9B, 10B) desdits éléments (9, 10) et s'étendant sensiblement parallèlement à la barre de lestage du bord longitudinal (8) inférieur de la surface de projection (2).

4. Ecran de projection (1) selon l'une des revendications précédentes, **caractérisé en ce que** les seconds moyens de lestage (11) fixés aux, ou au voisinage des, extrémités des éléments (9, 10) longilignes déformables sont formés par une barre creuse à l'intérieur de laquelle sont logés, avec jeu vertical en position d'utilisation de l'écran, lesdits premiers moyens de lestage (5) du bord longitudinal (8) inférieur de la surface de projection (2), ces premiers moyens de lestage (5) du bord longitudinal (8) inférieur de la surface de projection (2) étant de préférence formés par une barre de lestage.

5. Ecran de projection (1) selon l'une des revendications précédentes, **caractérisé en ce qu'**il comporte des moyens de réglage du niveau des seconds moyens de lestage (11) pour l'exercice de forces de traction horizontale (FH) par rapport aux premiers moyens de lestage (5) pour l'exercice de forces de traction verticales (FV), de telle sorte qu'en position d'utilisation souhaitée de la surface de projection (2), lesdits seconds moyens de lestage (11) pour l'exercice de forces de traction horizontales (FH) et lesdits premiers moyens de lestage (5) pour l'exercice de forces de traction verticales (FV) sont libres de contact d'appui ou de retenue vertical entre eux.

6. Ecran de projection (1) selon l'une des revendications précédentes, **caractérisé en ce qu'**il est du type déroulant, pour lequel lesdits moyens de maintien (4) à l'état suspendu de la surface de projection (2) sont formés par un rouleau (4) autour duquel la surface de projection (2), est enroulable et déroulable, et
**en ce que** lesdits seconds moyens de lestage (11) pour l'exercice de forces de traction horizontales (FH) et lesdits premiers moyens de lestage (5) pour l'exercice de forces de traction verticales (FV) sont distincts et montés à action de lestage indépendante en au moins une position au moins partiellement déroulée de la surface de projection (2) correspondant à la ou l'une desdites position(s) d'utilisation.

7. Ecran de projection (1) selon la revendication 6, **caractérisé en ce que** lesdits seconds moyens de lestage (11) pour l'exercice de forces de traction horizontales (FH) et lesdits moyens de lestage (5) pour l'exercice de forces de traction verticales (FV) sont animés d'un déplacement relatif axial suivant la direction d'enroulement et de déroulement pour occuper au moins deux positions, l'une dans laquelle les seconds moyens de lestage (11) pour l'exercice de forces de traction horizontales (FH) et les premiers moyens de lestage (5) pour l'exercice de forces de traction verticales (FV) sont libres de contact d'appui ou de retenue vertical entre eux et l'autre dans laquelle les seconds moyens de lestage (11) pour l'exercice de forces de traction horizontales (FH) et les premiers moyens de lestage (5) pour l'exercice de forces de traction verticales (FV) viennent en contact d'appui ou de retenue vertical, les parties desdits seconds moyens de lestage (11, 5) venant en contact formant moyens d'entraînement en déplacement vertical des seconds moyens de lestage (11) des éléments (9, 10) longilignes déformables, lesdits moyens d'entraînement étant actifs lors de la phase d'enroulement sur une portion de la course d'enroulement de la surface de projection.

8. Ecran de projection (1) selon la revendication 7, **caracterisé en ce qu'**il est du type dans lequel les seconds moyens de lestage (11) des éléments (9, 10) longilignes déformables et les premiers moyens de lestage (5) du bord longitudinal (8) inférieur de la surface de projection (2) sont respectivement formés, les uns, par une barre de lestage creuse, dite barre de traction horizontale, et, les autres, par une autre barre de lestage dite de traction verticale, ladite barre de traction verticale étant logée, avec jeu vertical en position d'utilisation, à l'intérieur de la barre de traction horizontale, et **en ce que** lesdits moyens d'entraînement sont formés par une surface d'appui intérieure (13) de ladite barre de traction horizontale apte à coopérer avec une surface d'appui extérieure (12) de la barre de traction verticale.

9. Ecran de projection (1) selon la revendication 7, **caracterisé en ce qu'**il est du type dans lequel les seconds moyens de lestage (11) des éléments (9, 10) longilignes déformables et les premiers moyens de lestage (5) du bord longitudinal (8) inférieur de la surface de projection (2) sont respectivement formés, les uns, par une barre de lestage creuse, dite barre de traction horizontale, et, les autres, par une autre barre de lestage dite de traction verticale, ladite barre de traction verticale étant logée, avec jeu vertical en position d'utilisation, à l'intérieur de la barre de traction horizontale, et **en ce que** lesdits moyens d'entraînement sont formés par des jeux d'organes de type mâle et femelle, lesdits organes de type mâle et femelle étant portés, indifféremment, les uns, par les parties d'extrémité de la barre de traction horizontale, et, les autres, par les parties d'extrémité de la barre de traction verticale, lesdits organes mâle et femelle étant animés d'un déplacement relatif axial suivant la direction d'enroulement et de déroulement pour occuper au moins deux positions, l'une dans laquelle lesdits organes de type mâle et femelle sont libres de contact d'appui ou de retenue vertical entre eux et l'autre dans laquelle les organes de type mâle et femelle viennent en contact d'appui ou de retenue vertical entre eux.

10. Ecran de projection (1) selon l'une des revendications précédentes, **caracterisé en ce qu'**il est du type dans lequel les seconds moyens de lestage (11) fixés aux, ou au voisinage des, extrémités des éléments (9, 10) longilignes déformables sont formés par une barre creuse, dite barre de traction horizontale, à l'intérieur de laquelle sont logés, avec jeu vertical en position d'utilisation de l'écran, lesdits premiers moyens de lestage (5) du bord longitudinal (8) inférieur de la surface de projection (2), ces premiers moyens de lestage du bord longitudinal (8) inférieur de la surface de projection (2) étant formés par une barre de lestage, dite barre de traction verticale, les barres (5, 11) de traction verticale et horizontale étant formées chacune par un corps profilé muni à chacune de ses extrémités d'un embout (16, 18), et **en ce que** les embouts (18) de la barre (5) de traction de traction verticale sont, selon la direction transversale à la direction d'enroulement et à l'axe de ladite barre (5), d'une part, de dimension supérieure à la dimension du corps profilé de la barre (5) de traction de traction verticale et, d'autre part, de dimension apte à limiter le jeu entre les deux barres (5, 11) selon ladite direction transversale à la direction de déroulement et à l'axe de la barre (5).

11. Ecran de projection (1) selon l'une des revendications précédentes, **caractérisé en ce que** la surface de projection (2) est formée d'une toile.

12. Ecran de projection (1) selon la revendication 11, **caractérisé en ce que** la toile de ladite surface de projection est tissée à base de fils en fibre de verre enduits de PVC, ladite toile étant dite à faible élasticité.

## Claims

1. A projection screen (1) comprising:
- a projection surface (2) of generally rectangular shape, presenting two longitudinal edges (8, 3) at the top and the bottom that are substantially horizontal and two lateral edges (6, 7), said surface being suitable for being tensioned and extending at least in part over a plane that is substantially vertical, at least in a utilisation position;
- support means (4) for supporting the projection surface (2) in the suspended state in said at least one utilisation position, said support means (4) being connected to the top longitudinal edge (3) of the projection surface;
- means for exerting vertical traction forces (FV) on the projection surface (2), said means comprising at least first weighting means (5) fastened to, or in the vicinity of, the bottom longitudinal edge (8) of the projection surface (2); and
- means (9, 10, 11) for exerting horizontal traction forces (FH) on the projection surface (2), said means comprising at least, on one side, second weighting means (11) and, on the other side, two deformable elongate elements (9, 10) such as cables or cords, each element (9, 10) being connected at, or in the vicinity of, its top end (9A, 10A) to said support means (4) and at, or in the vicinity of, its bottom end (9B, 10B) to said weighting means (11), and also being connected to a corresponding one of the lateral edges (6, 7) of the projection surface (2), each elongate element (9, 10) being arranged to apply the load of said associated weighting means (11) in the form of horizontal traction forces (FH) to the corresponding lateral edge (6, 7);
the screen being **characterised in that**
said second weighting means (11) for exerting horizontal traction forces (FH) and said first weighting means (5) for exerting vertical traction forces (FV) are distinct and are mounted to exert independent weighting actions in at least one position corresponding to said or one of said utilisation positions, said second weighting means (11) for exerting horizontal traction forces (FH) being heavy means exerting a traction force on the elongate elements (9, 10) to which they are fastened simply as a result of their weight.

2. A projection screen (1) according to claim 1, **characterised in that** the second weighting means (11) fastened to, or in the vicinity of, the bottom end (9B, 10B) of one of the deformable elongate elements (9, 10) are coupled to the second weighting means (11) that are fastened to, or in the vicinity, of the bottom end (9B, 10B) of another one of said elongate elements (9, 10) to form an integral assembly that moves as a unit in said vertical direction.

3. A projection screen (1) according to any of preceding claims, **characterised in that** the first weighting means (5) fastened to, or in the vicinity of, the bottom longitudinal edge (8) of the projection surface (2) are formed by a weighting bar extending substantially parallel to said bottom longitudinal edge (8), and **in that** the weighting means (11) fastened to, or in the vicinity of, the bottom ends (9B, 10B) of the deformable elongate elements (9, 10) are formed by another weighting bar interconnecting the bottom ends (9B, 10B) of said elements (9, 10) and extending substantially parallel to the weighting bar of the bottom longitudinal edge (8) of the projection surface (2).

4. A projection screen (1) according to any of preceding claims, **characterised in that** the second weighting means (11) fastened to, or in the vicinity of, the ends of the deformable elongate elements (9, 10) are formed by a hollow bar having said first means (5) for weighting the bottom longitudinal edge (8) of the projection surface (2) housed therein with vertical clearance in the utilisation position of the screen, said first means (5) for weighting the bottom longitudinal edge (8) of the projection surface (2) preferably being formed by a weighting bar.

5. A projection screen (1) according to any of preceding claims, **characterised in that** it includes means for adjusting the level of the second weighting means (11) for exerting horizontal traction forces (FH) relative to the first weighting means (5) for exerting vertical traction forces (FV), such that in the desired utilisation position for the projection surface (2), said second weighting means (11) for exerting horizontal traction forces (FH) and said first weighting means (5) for exerting vertical traction forces (FV) are free from mutual vertical retaining or bearing contact.

6. A projection screen (1) according to any preceding claims, **characterised in that** the screen is of the roll-up type, in which said support means (4) for supporting the projection surface (2) in the suspended state are formed by a roller (4) around which the projection surface (2) can be rolled up or rolled out, and
**in that** said second weighting means (11) for exerting horizontal traction forces (FH) and said first weighting means (5) for exerting vertical traction forces (FV) are distinct and are mounted to perform their weighting actions independently in at least one at least partially rolled-out position of the projection surface (2) corresponding to the or one of said utilisation positions.

7. A projection screen (1) according to claim 6, **characterised in that** said second weighting means (11) for exerting horizontal traction forces (FH) and said weighting means (5) for exerting vertical traction forces (FV) move relative to each other axially along the roll-up and roll-out directions in order to occupy at least two positions, one position in which the second weighting means (11) for exerting horizontal traction forces (FH) and the first weighting means (5) for exerting vertical traction forces (FV) are free from mutual vertical retaining or bearing contact, and another position in which the second weighting means (11) for exerting horizontal traction forces (FH) and the first weighting means (5) for exerting vertical traction forces (FV) come into vertical retaining or bearing contact, the portions of said second weighting means (11, 5) that come into contact forming entrainment means for entraining vertical movement of the second means (11) for weighting the deformable elongate elements (9, 10), said entrainment means being active during rolling up over a fraction of the rolling-up stroke of the projection surface.

8. A projection screen (1) according to claim 7, **characterised in that** it is of the type in which the second means (11) for weighting the deformable elongate elements (9, 10) and the first means (5) for weighting the bottom longitudinal edge (8) of the projection surface (2) are formed respectively by a hollow weighting bar referred to as a horizontal traction bar, and by another weighting bar referred to as a vertical traction bar, said vertical traction bar being received inside the horizontal traction bar with vertical clearance in the utilisation position, and
**in that** said entrainment means are formed by an inside bearing surface (13) of said horizontal traction bar suitable for co-operating with an outside bearing surface (12) of the vertical traction bar.

9. A projection screen (1) according to claim 7, **characterised in that** it is of the type in which the second means (11) for weighting the deformable elongate elements (9, 10) and the first means (5) for weighting the bottom longitudinal edge (8) of the projection surface (2) are formed respectively by a hollow weighting bar referred to as a horizontal traction bar, and by another weighting bar referred to as a vertical traction bar, said vertical traction bar being received inside the horizontal traction bar with vertical clearance in the utilisation position, and
**in that** said entrainment means are formed by sets of male and female type members, one of said sets of male and female type members being carried indifferently by the end portions of the horizontal traction bar and the other set by the end portions of the vertical traction bar, said male and female members being moved relative to one another axially in the roll-up and roll-out directions so as to occupy at least two positions, one in which said male and female type members are free of mutual vertical or retaining contact and the other in which the male and female type members come into mutual vertical retaining or bearing contact.

10. A projection screen (1) according to any preceding claims, **characterised in that** it is of the type in which the second weighting means (11) fastened to, or in the vicinity of, the ends of the deformable elongate elements (9, 10) are formed by a hollow bar referred to as a horizontal traction bar and receiving therein said first means (5) for weighting the bottom longitudinal edge (8) of the projection surface (2) with vertical clearance in the utilisation position of the screen, said first means for weighting the bottom longitudinal edge (8) of the projection surface (2) being formed by a weighting bar referred to as a vertical traction bar, the vertical horizontal traction bars (5, 11) each being formed by a section member provided at each of its ends with a respective endpiece (16, 18), and
**in that**, in the direction transverse to the roll-up direction and to the axis of the traction bar (5), the endpieces (18) of the traction bar (5) are first of a dimension greater than the dimension of the section member of the vertical traction bar (5) and secondly of a dimension suitable for limiting the clearance between the two bars (5, 11) in said direction transverse to the roll-up direction and to the axis of the bar (5).

11. A projection screen (1) according to any preceding claims, **characterised in that** the projection surface (2) is constituted by a fabric.

12. A projection screen (1) according to claim 11, **characterised in that** the fabric of said projection surface is woven using PVC-coated fibreglass yarns, said fabric being a so-called low-elasticity fabric.

## Patentansprüche

1. Projektionsschirm (1), Folgendes umfassend:
- eine Projektionsfläche (2) von in der Regel rechteckiger Form, die zwei, eine obere und eine untere, Längskanten (8, 3) aufweist, welche im Wesentlichen waagerecht sind, sowie zwei Seitenkanten (6, 7), wobei die besagte Fläche geeignet ist, gespannt zu werden und sich wenigstens teilweise über eine im Wesentlichen senkrechte Ebene in wenigstens einer Benutzungsposition zu erstrecken;
- Stützmittel (4) zur Stützung der Projektionsfläche (2) im aufgehängten Zustand in der besagten, wenigstens einen Benutzungsposition, wobei die besagten Stützmittel (4) an der oberen Längskante (3) der Projektionsfläche befestigt sind;
- Mittel zur Ausübung senkrechter Zugkräfte (FV) auf die Projektionsfläche (2), welche wenigstens erste Ballastmittel (5) umfassen, die an oder in der Nähe der unteren Längskante (8) der Projektionsfläche (2) fixiert sind;
- Mittel (9, 10, 11) zur Ausübung waagerechter Zugkräfte (FH) auf die Projektionsfläche (2), welche einerseits wenigstens zweite Ballastmittel (11) umfassen und andererseits zwei verformbare, längliche Elemente (9, 10) wie Kabel oder Seile, wobei jedes Element (9, 10) an oder in der Nähe seines oberen Endes (9A, 10A) an den besagten Stützmitteln (4) befestigt ist und an oder in der Nähe seines unteren Endes (9B, 10B) an den besagten Ballastmitteln (11), und außerdem an einer der Seitenkanten (6, 7) der Projektionsfläche (2), wobei jedes längliche Element (9, 10) so angeordnet ist, dass an der entsprechenden Seitenkante (6, 7) die Last der zugeordneten Ballastmittel (11) in Form von waagerechten Zugkräften (FH) angewandt wird,
**dadurch gekennzeichnet, dass**
die besagten zweiten Ballastmittel (11) für die Ausübung waagerechter Zugkräfte (FH) und die besagten ersten Ballastmittel (5) für die Ausübung senkrechter Zugkräfte (FV) separat sind und so montiert sind, dass eine unabhängige Ballastwirkung in wenigstens einer Position ausgeübt wird, welche der besagten oder einer der besagten Benutzungspositionen entspricht, wobei die besagten zweiten Ballastmittel (11) zur Ausübung waagerechter Zugkräfte (FH) schwere Mittel sind, die allein durch ihr Gewicht auf die länglichen Elemente (9, 10), an denen sie befestigt sind, eine Zugkraft ausüben.

2. Projektionsschirm (1) gemäß Patentanspruch (1), **dadurch gekennzeichnet, dass** die zweiten Ballastmittel (11), die am oder in der Nähe des unteren Endes (9B, 10B) eines der verformbaren, länglichen Elemente (9, 10) befestigt sind, mit den zweiten Ballastmitteln (11) verbunden sind, die am oder in der Nähe des unteren Endes (9B, 10B) eines anderen der besagten länglichen Elemente (9, 10) befestigt sind, um eine Einheit zu bilden, die sich als Ganzes in der besagten, senkrechten Richtung bewegt.

3. Projektionsschirm (1) gemäß eines der vorstehenden Patentansprüche, **dadurch gekennzeichnet, dass** die ersten Ballastmittel (5), die an der oder in der Nähe der unteren Längskante (8) der Projektionsfläche (2) befestigt sind, aus einer Ballaststange bestehen, die sich im Wesentlichen parallel zu der besagten, unteren Längskante (8) erstreckt, und dadurch, dass die an den oder in der Nähe der unteren Enden (9B, 10B) der verformbaren, länglichen Elemente (9, 10) befestigten Ballastmittel (11) aus einer weiteren Ballaststange bestehen, welche die unteren Enden (9B, 10B) der besagten Elemente (9, 10) miteinander verbindet und sich im Wesentlichen parallel zu der Ballaststange der unteren Längskante (8) der Projektionsfläche (2) erstreckt.

4. Projektionsschirm (1) gemäß eines der vorstehenden Patentansprüche, **dadurch gekennzeichnet, dass** die zweiten Ballastmittel (11), die an der oder in der Nähe der Enden der verformbaren, länglichen Elemente (9, 10) befestigt sind, aus einer Hohlstange bestehen, in deren Innerem sich mit vertikalem Spiel in der Benutzungsposition des Schirms die besagten ersten Ballastmittel (5) der unteren Längskante (8) der Projektionsfläche (2) befinden, wobei diese besagten ersten Ballastmittel (5) der unteren Längskante (8) der Projektionsfläche (2) vorzugsweise aus einer Ballaststange bestehen.

5. Projektionsschirm (1) gemäß eines der vorstehenden Patentansprüche, **dadurch gekennzeichnet, dass** er Mittel für die Niveauregulierung der zweiten Ballastmittel (11) für die Ausübung von waagerechten Zugkräften (FH) bezüglich der ersten Ballastmittel (5) für die Ausübung von senkrechten Zugkräften (FV) umfasst, so dass in der gewünschten Benutzungsposition der Projektionsfläche (2) die besagten zweiten Ballastmittel (11) für die Ausübung von waagerechten Zugkräften (FH) und die besagten ersten Ballastmittel (5) für die Ausübung von senkrechten Zugkräften (FV) frei von senkrechtem Auflage- oder Rückhaltkontakt untereinander sind.

6. Projektionsschirm (1) gemäß eines der vorstehenden Patentansprüche, **dadurch gekennzeichnet, dass** er vom Abrolltyp ist, bei dem die besagten Stützmittel (4) der Projektionsfläche (2) im aufgehängten Zustand aus einer Walze (4) bestehen, um welche die Projektionsfläche (2) auf- oder abgerollt werden kann, und
dadurch, dass die besagten zweiten Ballastmittel (11) für die Ausübung von waagerechten Zugkräften (FH) und die besagten ersten Ballastmittel (5) für die Ausübung von senkrechten Zugkräften (FV) separat sind und so montiert sind, dass in wenigstens einer Position der wenigstens teilweisen Abrollung der Projektionsfläche (2), welche der oder einer der besagten Benutzungspositionen entspricht, eine unabhängige Ballastwirkung ausgeübt wird.

7. Projektionsschirm (1) gemäß Patentanspruch 6, **dadurch gekennzeichnet, dass** die besagten zweiten Ballastmittel (11) für die Ausübung von waagerechten Zugkräften (FH) und die besagten Ballastmittel (5) für die Ausübung von senkrechten Zugkräften (FV) bezüglich einander eine relative axiale Bewegung entlang der Auf- und der Abrollrichtung aufweisen, um wenigstens zwei Positionen einzunehmen, eine, in welcher die zweiten Ballastmittel (11) für die Ausübung von waagerechten Zugkräften (FH) und die ersten Ballastmittel (5) für die Ausübung von senkrechten Zugkräften (FV) frei von senkrechtem Auflage- oder Rückhaltkontakt untereinander sind, und die andere, in der die zweiten Ballastmittel (11) für die Ausübung von waagerechten Zugkräften (FH) und die besagten ersten Ballastmittel (5) für die Ausübung von senkrechten Zugkräften (FV) in senkrechten Auflage- oder Rückhaltkontakt untereinander kommen, wobei die in Kontakt kommenden Teile der besagten zweiten Ballastmittel (11, 5) Mitnahmemittel bilden unter senkrechter Bewegung der zweiten Ballastmittel (11) der länglichen, verformbaren Elemente (9, 10), und die besagten Mitnahmemittel in der Aufrollphase an einem Abschnitt des Aufrollhubs der Projektionsfläche aktiv sind.

8. Projektionsschirm (1) gemäß Patentanspruch 7, **dadurch gekennzeichnet, dass** er von dem Typ ist, bei dem die zweiten Ballastmittel (11) der länglichen, verformbaren Elemente (9, 10) und die ersten Ballastmittel (5) der unteren Längskante (8) der Projektionsfläche (2) jeweils, in einem Fall, aus einer hohlen Ballaststange bestehen, die als waagerechte Zugstange bezeichnet wird, und im anderen Fall durch eine weitere Ballaststange, die als senkrechte Zugstange bezeichnet wird, wobei die besagte senkrechte Zugstange in der Benutzungsposition mit senkrechtem Spiel innerhalb der waagerechten Zugstange aufgenommen wird, und dadurch, dass die besagten Mitnahmemittel aus einer internen Auflagefläche (13) der besagten waagerechten Zugstange bestehen, welche geeignet ist, mit einer externen Auflagefläche (12) der senkrechten Zugstange zusammenzuwirken.

9. Projektionsschirm (1) gemäß Patentanspruch 7, **dadurch gekennzeichnet, dass** er von dem Typ ist, bei dem die zweiten Ballastmittel (11) der länglichen, verformbaren Elemente (9, 10) und die ersten Ballastmittel (5) der unteren Längskante (8) der Projektionsfläche (2) jeweils, in einem Fall, aus einer hohlen Ballaststange bestehen, die als waagerechte Zugstange bezeichnet wird, und im anderen Fall durch eine weitere Ballaststange, die als senkrechte Zugstange bezeichnet wird, wobei die besagte senkrechte Zugstange in der Benutzungsposition mit senkrechtem Spiel innerhalb der waagerechten Zugstange aufgenommen wird, und dadurch, dass die besagten Mitnahmemittel aus Sätzen von Komponenten männlichen und weiblichen Typs bestehen, wobei die Komponenten männlichen und weiblichen Typs gleichermaßen, die einen durch die Endteile der waagerechten Zugstange und die anderen durch die Endteile der senkrechten Zugstange, getragen werden, wobei die besagten männlichen und weiblichen Komponenten bezüglich einander axial entlang der Auf- und in der Abrollrichtung bewegt werden, um wenigstens zwei Positionen einzunehmen, eine, in der die besagten Komponenten männlichen und weiblichen Typs frei von senkrechtem Auflage- oder Rückhaltkontakt untereinander sind, und die andere, in der die Komponenten männlichen und weiblichen Typs in senkrechten Auflage- oder Rückhaltkontakt untereinander kommen.

10. Projektionsschirm (1) gemäß eines der vorstehenden Patentansprüche, **dadurch gekennzeichnet, dass** er von dem Typ ist, bei dem die zweiten Ballastmittel (11) die am oder in der Nähe der Enden der verformbaren, länglichen Elemente (9, 10) befestigt sind, aus einer als waagerechte Zugstange bezeichneten Hohlstange bestehen, innerhalb welcher sich mit senkrechtem Spiel in der Benutzungsposition des Schirms die besagten ersten Ballastmittel (5) der unteren Längskante (8) der Projektionsfläche (2) befinden, wobei diese ersten Ballastmittel der unteren Längskante (8) der Projektionsfläche (2) aus einer als senkrechte Zugstange bezeichneten Ballaststange bestehen, wobei die senkrechte und die waagerechte Zugstange (5, 11) jeweils aus einem Profilkörper bestehen, der an jedem seiner Enden ein Endstück (16, 18) aufweist, und dadurch, dass die Endstücke (18) der senkrechten Zugstange (5) quer zur Aufrollrichtung und zur Achse der besagten Stange (5) einerseits größer sind als die Abmessungen des Profilkörpers der senkrechten Zugstange (5), und andererseits von einer Größe, die geeignet ist, das Spiel zwischen den zwei Stangen (5, 11) in der besagten, quer zur Aufrollrichtung und zur Achse der Stange (5) verlaufenden Richtung zu begrenzen.

11. Projektionsschirm (1) gemäß eines der vorstehenden Patentansprüche, **dadurch gekennzeichnet, dass** die Projektionsfläche (2) aus einem Gewebe besteht.

12. Projektionsschirm (1) gemäß Patentanspruch 11, **dadurch gekennzeichnet, dass** das Gewebe der besagten Projektionsfläche aus PVC-beschichtetem Glasfilamentgarn gewoben ist, wobei das besagte Gewebe als gering elastisch bezeichnet wird.
